# EUROPÄISCHE PATENTSCHRIFT

(11) **EP 2 741 451 B1**
(45) Veröffentlichungstag und Bekanntmachung des Hinweises auf die Patenterteilung: **26.04.2017**
(21) Anmeldenummer: 12195850.8
(22) Anmeldetag: 06.12.2012
(51) Int. Cl.: H04L 12/40, H04L 12/12, G06F 9/44, G06F 9/445

(54) **Verfahren zum Anbinden eines Hardwaremoduls an einen Feldbus**
Method for connecting a hardware module to a field bus
Procédé de liaison d'un module matériel sur un bus de terrain

(43) Veröffentlichungstag der Anmeldung: 11.06.2014
(73) Patentinhaber: SICK AG, 79183 Waldkirch/Breisgau (DE)
(72) Erfinder: Haberer, Manfred, 79359 Riegel (DE); Rapp, Ralph, 79346 Endingen (DE); Angenendt, Christoph, 79108 Freiburg (DE)
(74) Vertreter: Manitz, Finsterwald & Partner GbR

(56) Entgegenhaltungen:
- US-A1- 2003 217 255
- US-A1- 2006 195 832

## Beschreibung

Die vorliegende Erfindung betrifft ein Verfahren zum Anbinden eines Hardwaremoduls an einen Feldbus, wobei eine Datenverbindung zwischen Hardwaremodul und Feldbus durch ein mit dem Feldbus verbundenes Netzwerkmodul hergestellt wird, welches einen internen Speicher aufweist. Das Hardwaremodul wird dazu mit dem Netzwerkmodul gekoppelt, wobei durch das Netzwerkmodul eine Kommunikation des Hardwaremoduls über dem Feldbus ermöglicht wird.

Feldbusse werden insbesondere bei der Industrieautomation eingesetzt und gestatten eine Datenkommunikation beispielsweise von Sensoren und Aktoren mit einem zentralen Steuersystem. Aufgrund der vielen verschiedenen bekannten Feldbussysteme (zum Beispiel CAN, EtherCAT, ProfiNET oder Profibus) und den damit einhergehenden unterschiedlichen Kommunikationsprotokollen, müssen Sensoren oder Aktoren, welche an den Feldbus angeschlossen werden sollen, jeweils speziell an den verwendeten Feldbus angepasst sein. Es erhöht sich somit die Variantenvielfalt in der Produktion der Sensoren und Aktoren, was zu erhöhten Entwicklungs-, Produktions- und Lagerkosten führt.

Insbesondere bei sicherheitsrelevanten Anwendungen, für welche sichere Feldbusse (beispielsweise ProfiNET Safe oder Safe EtherCAT) verwendet werden, muss die Gerätesoftware und die Software, welche zur Kommunikation über den Feldbus dient (der sogenannte Netzwerkstack) immer einer vollständigen Verifikation und/oder einer sicherheitstechnischen Qualifizierung und Abnahme unterzogen werden. Die Verifikation und Qualifikation ist dabei für jeden zu verwendenden Typ von Feldbus durchzuführen und mit entsprechenden Kosten und Aufwand verbunden.

Aus der US 2003/0217255 A1 ist eine Anordnung bekannt, mittels welcher zur Laufzeit Geräte, wie z.B. Netzwerkkarten, an einen Computer angeschlossen werden können. Dazu wird eine auf der Netzwerkkarte gespeicherte Firmware an den Computer übertragen, um eine Kommunikation zwischen Computer und Netzwerkkarte zu gestatten.

Der Erfindung liegt somit die Aufgabe zugrunde, ein Verfahren zum Anbinden eines Hardwaremoduls an einen Feldbus anzugeben, welches den Aufwand der Adaption des Hardwaremoduls an verschiedene Feldbussysteme verringert und es damit gestattet, das Hardwaremodul flexibler einzusetzen.

Erfindungsgemäß wird diese Aufgabe durch ein Verfahren gemäß Anspruch 1 und insbesondere dadurch gelöst, dass von dem Hardwaremodul eine Kommunikationssoftware aus dem Speicher des Netzwerkmoduls ausgelesen wird, die zur Kommunikation des Hardwaremoduls mit dem Feldbus vorgesehen ist. Anschließend wird die Kommunikationssoftware in dem Hardwaremodul gespeichert, wobei das Hardwaremodul die Kommunikationssoftware verwendet, um über den Feldbus zu kommunizieren. Dabei ist die ausgelesene Kommunikationssoftware an den Feldbus angepasst, mit dem das Netzwerkmodul eine Datenverbindung herstellt, wobei in dem Speicher des Netzwerkmoduls Kommunikationssoftware für zwei oder mehr unterschiedliche Feldbussysteme gespeichert ist.

Vorteilhafterweise muss die Kommunikationssoftware (also der Netzwerkstack) nicht schon von vornherein in dem Hardwaremodul vorliegen, wodurch das Hardwaremodul auf die Kommunikation mit einem bestimmten Typ Feldbus beschränkt wäre. Stattdessen erhält das Hardwaremodul die Kommunikationssoftware von dem Netzwerkmodul. Die Kommunikationssoftware wird dazu von dem Netzwerkmodul zu dem Hardwaremodul transferiert, wobei das Hardwaremodul durch die Kommunikationssoftware in die Lage versetzt wird, über den Feldbus kommunizieren zu können.

Als Hardwaremodul ist dabei jedes Gerät zu verstehen, welches zum Anschluss und zur Kommunikation über einen Feldbus vorgesehen ist. Beispielsweise können Hardwaremodule durch elektrische oder pneumatische Aktoren sowie durch Sensoren, wie beispielsweise Laserscanner, gebildet sein.

Das Hardwaremodul kann somit vollkommen unabhängig von einem verwendeten Feldbussystem entwickelt und hergestellt werden, da die Anpassung an ein jeweiliges Feldbussystem erst durch die Kopplung des Hardwaremoduls mit dem Netzwerkmodul erfolgt. Das Hardwaremodul kann folglich in lediglich einer Variante entwickelt, verifiziert und qualifiziert werden, wodurch sich die Entwicklungs-, Produktions- und Lagerhaltungskosten reduzieren.

Außerdem ist ein flexibler Einsatz von Hardwaremodulen in verschiedenen Feldbussystemen möglich, indem das Hardwaremodul von dem Netzwerkmodul getrennt wird und mit einem neuen Netzwerkmodul eines zweiten Feldbusses gekoppelt wird. Nach der Kopplung mit dem neuen Netzwerkmodul wird eine neue Kommunikationssoftware aus dem Speicher des neuen Netzwerkmoduls ausgelesen, welche die bisherige Kommunikationssoftware in dem Hardwaremodul ersetzt. Dadurch ist das Hardwaremodul imstande, über den zweiten Feldbus zu kommunizieren.

Durch das erfindungsgemäße Verfahren lassen sich auch bestehende Hardwaremodule mit zukünftige, bisher unbekannte Feldbussystemen verbinden, indem Netzwerkmodule mit den Hardwaremodulen gekoppelt werden, in welchen eine Kommunikationssoftware für die zukünftigen Feldbussysteme gespeichert ist. Erfindungsgemäß können Hardwaremodule somit auch nach Weiterentwicklungen von Feldbussen weiter verwendet werden und müssen nicht gegen aktualisierte Hardwaremodule ausgetauscht werden.

Ebenfalls vorteilhaft ist, dass die in dem erfindungsgemäßen Verfahren verwendeten Netzwerkmodule nicht speziell an die Hardwaremodule angepasst sein müssen, das heißt, eine bestimmte Art von Netzwerkmodul kann prinzipiell mit jeder Art von Hardwaremodul gekoppelt werden, um dem Hardwaremodul die Kommunikation über einen bestimmten Feldbus zu ermöglichen. Das Netzwerkmodul kann somit unabhängig von den Hardwaremodulen entwickelt und produziert werden. Folglich können sich hohe Stückzahlen für das Netzwerkmodul ergeben, wodurch die Kosten für einzelne Netzwerkmodule gesenkt werden können.

Vorteilhafte Ausführungsformen der Erfindung sind in der Beschreibung, den Zeichnungen sowie den Unteransprüchen angegeben.

Erfindungsgemäß ist in dem Speicher des Netzwerkmoduls Kommunikationssoftware für zwei oder mehr unterschiedliche Feldbussysteme gespeichert. Das Netzwerkmodul kann also zur Anbindung des Hardwaremoduls an verschiedene Feldbussysteme dienen. In Abhängigkeit davon, mit welchem Feldbussystem das Netzwerkmodul gerade verbunden ist, wird dem Hardwaremodul die jeweils passende Kommunikationssoftware bereitgestellt.

Gemäß einer vorteilhaften Ausführungsform weist das Hardwaremodul einen zweikanaligen Prozessor, insbesondere einen Mikroprozessor, oder wenigstens zwei redundante Prozessoren auf. Die Kommunikationssoftware wird dabei redundant in jedem Kanal oder jedem Prozessor gespeichert und von jedem Kanal oder jedem Prozessor verarbeitet. Eine zweikanalige Ausführung kann dabei insbesondere bei sicherheitskritischen Anwendungen notwendig sein, um eine ausfallsichere Hard- und Software-Architektur zu schaffen. Beim Ausfall eines Kanals bzw. eines Prozessors übernimmt der zweite Kanal oder der zweite Prozessor die Aufgaben des ausgefallenen Kanals. Das erfindungsgemäße Verfahren kann somit beispielsweise für sichere Sensoren, wie zum Beispiel sichere Laserscanner eingesetzt werden.

Gemäß einer weiteren vorteilhaften Ausführungsform ist das Netzwerkmodul mechanisch von dem Hardwaremodul auch wieder lösbar. Somit lassen sich Netzwerkmodul und Hardwaremodul getrennt voneinander herstellen und können beispielsweise im Fehlerfall unabhängig voneinander ersetzt werden, wodurch sich geringere Reparaturkosten ergeben können. Zudem können auf diese Weise sowohl das Netzwerkmodul als auch das Hardwaremodul jeweils mit beliebigen anderen Hard- und Netzwerkmodulen gekoppelt werden. Eine Verwendung eines Hardwaremoduls mit einem alternativen Feldbussystem ist somit jederzeit möglich. Insbesondere sind Netzwerkmodul und Hardwaremodul in separaten Gehäusen angeordnet.

Gemäß einer weiteren vorteilhaften Ausführungsform ist das Hardwaremodul ein Sensormodul, insbesondere ein sicheres Sensormodul. Das Hardwaremodul kann somit dazu dienen, Messdaten zu erfassen, wobei das Sensormodul insbesondere für sicherheitskritische Anwendungen ausgelegt sein kann.

Gemäß einer weiteren vorteilhaften Ausführungsform ist das Hardwaremodul ein Laserscanner, insbesondere ein sicherer Laserscanner. Mit dem als Laserscanner ausgeführten Hardwaremodul kann somit beispielsweise ein Schutzbereich mittels Laserlicht überwacht werden und ein Alarm über den Feldbus ausgegeben werden, wenn sich eine Person in dem Schutzbereich befindet.

Gemäß einer weiteren vorteilhaften Ausführungsform ist der Feldbus ein ethernetbasierter Feldbus, insbesondere vom Typ ProfiNET Safe oder Safe EtherCAT. Ethernetbasierte Feldbusse sind weit verbreitet, wobei eine Ausführung als sicherer Feldbus vom Typ ProfiNET Safe oder Safe EtherCAT insbesondere dann sinnvoll ist, wenn auch das Hardwaremodul in sicherer Ausführung, beispielsweise als sicherer Laserscanner, vorliegt.

Vorteilhafterweise kann bei sicherheitskritischen Anwendungen durch das erfindungsgemäße Verfahren in dem Netzwerkmodul auf die üblicherweise notwendige Anordnung eines redundanten Prozessors verzichtet werden, da die Kommunikationssoftware bereits redundant in dem Hardwaremodul verarbeitet wird. Somit ist eine Redundanz in dem Netzwerkmodul nicht mehr erforderlich.

Die Erfindung umfasst weiterhin ein Netzwerkmodul, welches zur Einbindung eines Hardwaremoduls in einen Feldbus dient, wobei das Netzwerkmodul einen internen Speicher aufweist, in dem eine Kommunikationssoftware gespeichert ist, die dem Hardwaremodul eine Kommunikation über den Feldbus ermöglicht. Weiterhin umfasst das Netzwerkmodul eine Schnittstelle für das Hardwaremodul, die dazu ausgebildet ist, eine Kommunikationssoftware aus dem internen Speicher an das Hardwaremodul zu übertragen, wobei die Kommunikationssoftware an den Feldbus (26) angepasst ist, mit dem das Netzwerkmodul (12) eine Datenverbindung ermöglicht. Das erfindungsgemäße Netzwerkmodul gestattet somit einem Hardwaremodul die Kommunikation über den Feldbus, indem das Netzwerkmodul dem Hardwaremodul an der Schnittstelle die Kommunikationssoftware bereitstellt, die an das Hardwaremodul übertragbar ist.

Gemäß einer vorteilhaften Ausführungsform ist der interne Speicher ein nichtflüchtiger Speicher. Die Kommunikationssoftware kann folglich in dem Netzwerkmodul gespeichert bleiben, auch wenn das Netzwerkmodul über keine Energie bzw. Spannungsversorgung verfügt.

Ebenfalls offenbart wird ein Hardwaremodul zur Anbindung an einen Feldbus, welches einen Prozessor aufweist. Das erfindungsgemäße Hardwaremodul zeichnet sich dadurch aus, dass der Prozessor ausgestaltet ist, eine Kommunikationssoftware, welche eine Kommunikation des Hardwaremoduls über den Feldbus ermöglicht, insbesondere von einem Netzwerkmodul, abzurufen und zur Kommunikation über den Feldbus zu verwenden. Das Hardwaremodul kann somit mittels unterschiedlicher Kommunikationssoftware über verschiedene Feldbussysteme kommunizieren.

Gemäß einer vorteilhaften Ausführungsform umfasst der Prozessor einen zweikanaligen Prozessor. Alternativ ist ein zusätzlicher redundanter Prozessor vorgesehen. Auf diese Weise wird die Ausfallsicherheit des Hardwaremoduls erhöht, welches dann auch als sicheres Hardwaremodul betrieben werden kann.

Weiterhin umfasst die Erfindung ein Modulsystem, umfassend zumindest ein Hardwaremodul, das über ein Netzwerkmodul mit einem Feldbus kommuniziert, wobei Hardwaremodul und Netzwerkmodul ausgebildet sind, eine Kommunikationssoftware von dem Netzwerkmodul an das Hardwaremodul zu übertragen, die dem Hardwaremodul die Kommunikation über den Feldbus ermöglicht.

Nachfolgend wird die Erfindung rein beispielhaft anhand einer möglichen Ausführungsform unter Bezugnahme auf die beigefügten Zeichnungen beschrieben. Es zeigen:
- Fig. 1: eine schematische Darstellung eines erfindungsgemäßen Modulsystems umfassend ein Hardwaremodul und ein Netzwerkmodul;
- Fig. 2: ein Feldbussystem, mit mehreren angeschlossenen erfindungsgemäßen Modulsystemen.

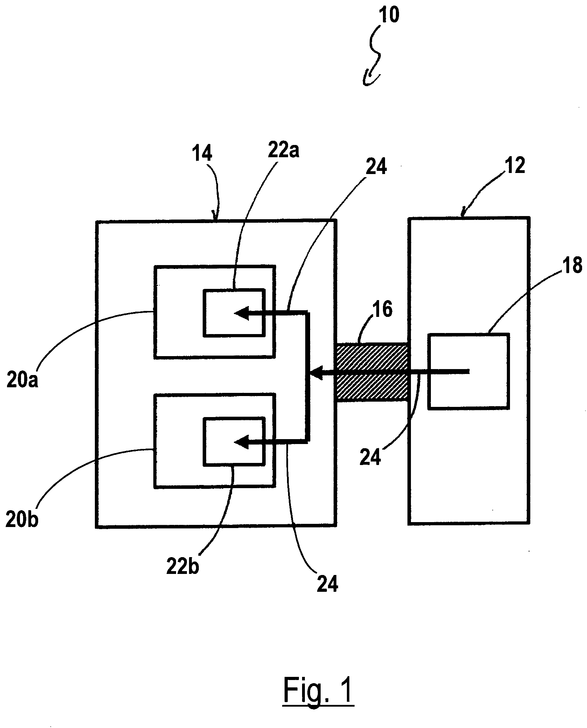

Fig. 1 zeigt schematisch ein Modulsystem 10, welches ein Netzwerkmodul 12 sowie ein Hardwaremodul 14 umfasst. Das Netzwerkmodul 12 umfasst eine Schnittstelle 16, welche eine Datenverbindung zwischen dem Netzwerkmodul 12 und dem Hardwaremodul 14 herstellt.

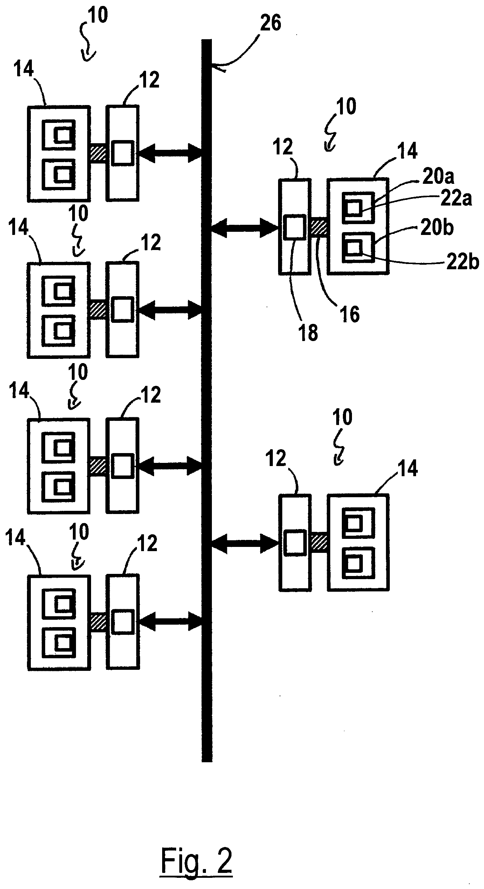

Das Netzwerkmodul 12 umfasst ferner einen nichtflüchtigen internen Speicher 18 sowie eine (nicht gezeigte) zweite Schnittstelle zum Anschluss an einen Feldbus 26 (Fig. 2).

Das Hardwaremodul 14 weist zwei redundante Prozessoren 20a, 20b auf, welche jeweils einen Speicherbereich 22a, 22b umfassen, in dem eine Kommunikationssoftware speicherbar ist.

Das Hardwaremodul 14 kann zum Beispiel einen sicheren Laserscanner umfassen, wobei hier von dem Hardwaremodul nur diejenigen Komponenten gezeigt sind, die in die Kommunikation mit dem Feldbus 26 involviert sind. Die Prozessoren 20a und 20b sind in an sich bekannter Weise mit den hier der Übersichtlichkeit halber nicht dargestellten übrigen Komponenten des Hardwaremoduls (also beispielsweise eines sicheren Laserscanners) zu deren Ansteuerung und Auslesung verbunden.

Soll nun das Hardwaremodul 14 an einen Feldbus 26 angeschlossen werden, so wird das Hardwaremodul 14 mit dem Netzwerkmodul 12 über die Schnittstelle 16 gekoppelt. Netzwerkmodul 12 und Hardwaremodul 14 sind vorteilhafterweise in zwei separaten Gehäusen (nicht gezeigt) angeordnet. Eine Kopplung erfolgt also zunächst mechanisch, beispielsweise durch Zusammenstecken der separaten Gehäuse mit einer Steckverbindung. Das Netzwerkmodul 12 steht dabei in Verbindung mit dem Feldbus 26 (vgl. Fig. 2).

Nach der Koppelung und dem Einschalten von Netzwerkmodul 12 und Hardwaremodul 14 überprüft das Netzwerkmodul 12 initial, mit welcher Art von Feldbus 26 es an seiner zweiten Schnittstelle verbunden ist. Stellt das Netzwerkmodul 12 beispielsweise fest, dass der angeschlossene Feldbus 26 ein Feldbus vom Typ ProfiNET Safe ist, wird eine Kommunikationssoftware in dem Speicher 18 ausgewählt, die das Hardwaremodul 14 in die Lage versetzt, über den Feldbus ProfiNET Safe zu kommunizieren. Die Kommunikationssoftware zur Kommunikation über ProfiNET Safe wird dann von dem Speicher 18 über die Schnittstelle 16 an das Hardwaremodul 14 übertragen und im Hardwaremodul 14 jeweils in den Speicherbereichen 22a, 22b abgespeichert. In jedem Speicherbereich 22a, 22b liegt nach dem Abspeichern eine identische Kopie der Kommunikationssoftware vor. Ein derartiger Kopiervorgang 24 ist in Fig. 1 durch Pfeile dargestellt.

Ist die Übertragung der Kommunikationssoftware in die Speicherbereiche 22a, 22b abgeschlossen, kann das Hardwaremodul 14 die Kommunikationssoftware (also den Netzwerkstack) verwenden, um über das Netzwerkmodul 12 mit dem Feldbus 26 zu kommunizieren. Zu diesem Zweck integriert das Hardwaremodul 14 die Kommunikationssoftware in seinen Programmcode und führt diesen mit den Prozessoren 20a, 20b aus.

Beispielhaft zeigt Fig. 2 eine Topologie des Feldbusses 26, an den insgesamt sechs Modulsysteme 10 angeschlossen sind. Eine derartige Topologie kann beispielsweise bei Industrieanlagen oder Fertigungsstraßen vorliegen, bei welchen verschiedene Schutzbereiche durch unabhängige Laserscanner überwacht werden.

Jedes Modulsystem 10 ist dabei durch ein Netzwerkmodul 12 mit dem Feldbus 26 verbunden. Die hier beispielsweise Laserscanner umfassenden Hardwaremodule 14 können somit über den Feldbus 26 untereinander und mit einem (nicht gezeigten) Steuergerät kommunizieren. Das Steuergerät kann beispielsweise die Prozesssteuerung der Industrieanlage übernehmen.

Bei allen an den Feldbus 26 angeschlossenen Modulsystemen 10 wird auch nach der initialen Übertragung der Kommunikationssoftware von dem Speicher 18 in die Speicherbereiche 22a, 22b des Hardwaremoduls 14 bei jedem Einschalten eines Modulsystems überprüft, ob die in den Speicherbereichen 22a, 22b abgespeicherte Kommunikationssoftware mit dem an dem Netzwerkmodul 12 angeschlossenen Feldbus 26 verwendbar ist, also hier beispielsweise ob die Kommunikationssoftware zur Verwendung mit einem ProfiNET Safe-Bus geeignet ist. Ist dies nicht der Fall, wird eine mit dem ProfiNET Safe-Bus kompatible Kommunikationssoftware von dem Speicher 18 über die Schnittstelle 16 in die Speicherbereiche 22a, 22b der Prozessoren 20a, 20b kopiert. Auf diese Weise wird eine reibungslose Kommunikation der Modulsysteme 10 mit dem Feldbus 26 sowohl beim Austausch eines Hardwaremoduls 14 als auch bei einer Änderung an dem Feldbus 26 sichergestellt.

### Bezugszeichenliste

- 10: Modulsystem
- 12: Netzwerkmodul
- 14: Hardwaremodul
- 16: Schnittstelle
- 18: Speicher
- 20a, 20b: Prozessor
- 22a, 22b: Speicherbereich
- 24: Kopiervorgang
- 26: Feldbus

## Patentansprüche

1. Verfahren zum Anbinden eines Hardwaremoduls (14) an einen Feldbus (26), wobei eine Datenverbindung zwischen Hardwaremodul (14) und Feldbus (26) durch ein mit dem Feldbus (26) verbundenes Netzwerkmodul (12) hergestellt wird, welches einen internen Speicher (18) aufweist, und das Verfahren die Schritte umfasst, dass
das Hardwaremodul (14) mit dem Netzwerkmodul (12) gekoppelt wird,
von dem Hardwaremodul (14) eine Kommunikationssoftware aus dem Speicher (18) des Netzwerkmoduls (12) ausgelesen wird, die zur Kommunikation des Hardwaremoduls (14) mit dem Feldbus (26) vorgesehen ist,
die Kommunikationssoftware in dem Hardwaremodul (14) gespeichert wird, und
das Hardwaremodul (14) die Kommunikationssoftware verwendet, um über den Feldbus (26) zu kommunizieren, wobei die ausgelesene Kommunikationssoftware an den Feldbus (26) angepasst ist, mit dem das Netzwerkmodul (12) eine Datenverbindung herstellt, wobei
in dem Speicher (18) des Netzwerkmoduls (12) Kommunikationssoftware für zumindest zwei unterschiedliche Feldbussysteme gespeichert ist.

2. Verfahren nach Anspruch 1,
**dadurch gekennzeichnet, dass**
das Hardwaremodul (14) einen zweikanaligen Prozessor (20), insbesondere einen Mikroprozessor, oder wenigstens zwei redundante Prozessoren (20a, 20b) aufweist, und die Kommunikationssoftware redundant in jedem Kanal oder jedem Prozessor (20) gespeichert wird und von jedem Kanal oder jedem Prozessor (20) verarbeitet wird.

3. Verfahren nach Anspruch 1 oder 2,
**dadurch gekennzeichnet, dass**
das Netzwerkmodul (12) mechanisch von dem Hardwaremodul (14) lösbar ist.

4. Verfahren nach einem der vorstehenden Ansprüche,
**dadurch gekennzeichnet, dass**
das Hardwaremodul ein Sensormodul (14), insbesondere ein sicheres Sensormodul (14), ist.

5. Verfahren nach einem der vorstehenden Ansprüche,
**dadurch gekennzeichnet, dass**
das Hardwaremodul (14) ein Laserscanner, insbesondere ein sicherer Laserscanner, ist.

6. Verfahren nach einem der vorstehenden Ansprüche,
**dadurch gekennzeichnet, dass**
der Feldbus (26) ein ethernetbasierter Feldbus (26), insbesondere vom Typ ProfiNET Safe oder Safe EtherCAT, ist.

7. Netzwerkmodul (12) zur Einbindung eines Hardwaremoduls (14) in einen Feldbus (26), umfassend
einen internen Speicher (18) in dem eine Kommunikationssoftware gespeichert ist, die dem Hardwaremodul (14) eine Kommunikation über den Feldbus (26) ermöglicht, und
eine Schnittstelle (16) für das Hardwaremodul (14), die dazu ausgebildet ist, eine Kommunikationssoftware aus dem internen Speicher (18) an das Hardwaremodul (14) zu übertragen, wobei die Kommunikationssoftware an den Feldbus (26) angepasst ist, mit dem das Netzwerkmodul (12) eine Datenverbindung ermöglicht, und wobei in dem Speicher (18) des Netzwerkmoduls (12) Kommunikationssoftware für zumindest zwei unterschiedliche Feldbussysteme gespeichert ist.

8. Netzwerkmodul (12) nach Anspruch 7,
**dadurch gekennzeichnet, dass**
der interne Speicher (18) ein nichtflüchtiger Speicher (18) ist.

9. Modulsystem (10), umfassend zumindest ein Hardwaremodul (14), das über ein Netzwerkmodul (12) mit einem Feldbus (26) kommuniziert, wobei
Hardwaremodul (14) und Netzwerkmodul (12) ausgebildet sind, eine Kommunikationssoftware von dem Netzwerkmodul (12) an das Hardwaremodul (14) zu übertragen, die dem Hardwaremodul (14) die Kommunikation über den Feldbus (26) ermöglicht,
**dadurch gekennzeichnet, dass**
in dem Speicher (18) des Netzwerkmoduls (12) Kommunikationssoftware für zumindest zwei unterschiedliche Feldbussysteme gespeichert ist.

## Claims

1. A method of connecting a hardware module (14) to a fieldbus (26), wherein a data connection between the hardware module (14) and the fieldbus (26) is established by a network module (12) which is connected to the fieldbus (26) and which has an internal memory (18), said method comprising the steps that
the hardware module (14) is coupled to the network module (12);
communication software is read out of the memory (18) of the network module (12) by the hardware module (14) and is provided for the communication of the hardware module (14) with the fieldbus (26);
the communication software is stored in the hardware module (14); and
the hardware module (14) uses the communication software to communicate over the fieldbus (26), wherein the read-out communication software is adapted to the fieldbus (26) with which the network module (12) establishes a data connection; and wherein communication software for at least two different fieldbus systems is stored in the memory (18) of the network module (12).

2. A method in accordance with claim 1,
**characterized in that**
the hardware module (14) has a two-channel processor (20), in particular a microprocessor, or at least two redundant processors (20a, 20b); and **in that** the communication software is stored redundantly in each channel or in each processor (20) and is processed by each channel or by each processor (20).

3. A method in accordance with claim 1 or claim 2,
**characterized in that**
the network module (12) is mechanically releasable from the hardware module (14).

4. A method in accordance with any one of the preceding claims,
**characterized in that**
the hardware module is a sensor module (14), in particular a safe sensor module (14).

5. A method in accordance with any one of the preceding claims,
**characterized in that**
the hardware module (14) is a laser scanner, in particular a safe laser scanner.

6. A method in accordance with any one of the preceding claims,
**characterized in that**
the fieldbus (26) is an Ethernet-based fieldbus (26), in particular of the type ProfiNET Safe or Safe EtherCAT.

7. A network module (12) for integrating a hardware module (14) into a fieldbus (26), comprising
an internal memory (18) in which communication software is stored which allows the hardware module (14) to communicate over the fieldbus (26); and
an interface (16) for the hardware module (14) which is configured to transfer communication software from the internal memory (18) to the hardware module (14), wherein the communication software is adapted to the fieldbus (26) with which the network module (12) establishes a data connection; and wherein communication software for at least two different fieldbus systems is stored in the memory (18) of the network module (12).

8. A network module (12) in accordance with claim 7,
**characterized in that**
the internal memory (18) is a non-volatile memory (18).

9. A modular system (10) comprising at least one hardware module (14) which communicates with a fieldbus (26) over a network module (12), wherein
the hardware module (14) and the network module (12) are configured to transfer communication software from the network module (12) to the hardware module (14), said software allowing the hardware module (14) to communicate over the fieldbus (26),
**characterized in that**
communication software for at least two different fieldbus systems is stored in the memory (18) of the network module (12).

## Revendications

1. Procédé de liaison d'un module matériel (14) à un bus de terrain (26), dans lequel on établit une liaison de données entre le module matériel (14) et le bus de terrain (26) par un module de réseau (12) relié au bus de terrain (26) et comprenant une mémoire interne (18), et le procédé comprend des étapes consistant à
coupler le module matériel (14) au module de réseau (12),
lire un logiciel de communication hors de la mémoire (18) du module de réseau (12) par le module matériel (14), logiciel qui est prévu pour la communication du module matériel (14) avec le bus de terrain (26),
mémoriser le logiciel de communication dans le module matériel (14), et utiliser le logiciel de communication par le module matériel (14), afin de communiquer via le bus de terrain (26), le logiciel de communication lu étant adapté au bus de terrain (26) avec lequel le module de réseau (12) établit une liaison de données,
dans lequel, dans la mémoire (18) du module de réseau (12), le logiciel de communication est mémorisé pour au moins deux systèmes de bus de terrain différents.

2. Procédé selon la revendication 1,
**caractérisé en ce que**
le module matériel (14) comprend un processeur à deux canaux (20), en particulier un microprocesseur, ou au moins deux processeurs redondants (20a, 20b), et le logiciel de communication est mémorisé de façon redondante dans chaque canal ou dans chaque processeur (20) et est traité par chaque canal ou par chaque processeur (20).

3. Procédé selon la revendication 1 ou 2,
**caractérisé en ce que**
le module de réseau (12) est détachable mécaniquement du module matériel (14).

4. Procédé selon l'une des revendications précédentes,
**caractérisé en ce que**
le module matériel est un module capteur (14), en particulier un module capteur sécurisé (14).

5. Procédé selon l'une des revendications précédentes,
**caractérisé en ce que**
le module matériel (14) est un scanneur laser, en particulier un scanneur laser sécurisé.

6. Procédé selon l'une des revendications précédentes,
**caractérisé en ce que**
le bus de terrain (26) est un bus de terrain (26) à base d'Ethernet, en particulier du type ProfiNET Safe ou Safe EtherCAT.

7. Module de réseau (12) pour intégrer un module matériel (14) dans un bus de terrain (26), comportant
une mémoire interne (18) dans laquelle est mémorisé un logiciel de communication, qui permet au module matériel (14) une communication via le bus de terrain (26), et
une interface (16) pour le module matériel (14) qui est réalisée pour transmettre un logiciel de communication depuis la mémoire interne (18) au module matériel (14), le logiciel de communication étant adapté au bus de terrain (26) par lequel le module de réseau (12) permet une liaison de données, et dans lequel un logiciel de communication pour au moins deux systèmes de bus de terrain différents est mémorisé dans la mémoire (18) du module de réseau (12).

8. Module de réseau (12) selon la revendication 7,
**caractérisé en ce que**
la mémoire interne (18) est une mémoire non-volatile (18).

9. Système de module (10), comportant au moins un module matériel (14) qui communique avec un bus de terrain (26) via un module de réseau (12), dans lequel
le module matériel (14) et le module de réseau (12) sont réalisés pour transmettre un logiciel de communication depuis le module de réseau (12) au module matériel (14), logiciel qui permet au module matériel (14) la communication via le bus de terrain (26),
**caractérisé en ce que**
dans la mémoire (18) du module de réseau (12) est mémorisé un logiciel de communication pour au moins deux systèmes de bus de terrain différents.
